# FASCICULE DE BREVET EUROPEEN

(11) **EP 4 448 335 B1**
(45) Date de publication et mention de la délivrance du brevet: **01.07.2026**
(21) Numéro de dépôt: 22839755.0
(22) Date de dépôt: 16.12.2022
(51) Int. Cl.: B60Q 1/12

(54) **PROCÉDÉ DE COMMANDE D'UN ÉCLAIRAGE DIRECTIONNEL ET DISPOSITIF D'ÉCLAIRAGE METTANT EN OEUVRE DE CE PROCÉDÉ**
VERFAHREN ZUR STEUERUNG EINER GERICHTETEN BELEUCHTUNG UND BELEUCHTUNGSVORRICHTUNG ZUR DURCHFÜHRUNG DIESES VERFAHRENS
METHOD FOR CONTROLLING DIRECTIONAL LIGHTING AND LIGHTING DEVICE IMPLEMENTING THIS METHOD

(30) Priorité: 17.12.2021 FR 2113925
(43) Date de publication de la demande: 23.10.2024
(73) Titulaire: VALEO VISION, 93012 Bobigny Cedex (FR)
(72) Inventeur: PRAT, Constantin, 93012 BOBIGNY Cedex (FR); LUBAT, Arthur, 93012 BOBIGNY Cedex (FR)
(74) Mandataire: Valeo Visibility
(86) Numéro de dépôt international: PCT/EP2022/086447
(87) Numéro de publication internationale: WO 2023/111309

(56) Documents cités:
- EP-A1- 3 672 369
- DE-A1- 102013 223 711
- FR-A1- 2 991 251
- FR-A1- 3 101 692
- FR-A1- 3 107 751
- FR-A1- 3 115 858

## Description

La présente invention concerne un procédé pour commander un éclairage directionnel émis par un dispositif d'éclairage de véhicule en direction d'une scène de route, dans lequel l'image du flux lumineux est adaptée à chaque direction de déplacement du véhicule. L'invention concerne également un dispositif d'éclairage de véhicule mis en œuvre par ce procédé.

L'invention trouve des applications dans le domaine de l'éclairage des scènes de route par des véhicules routiers, tels que les véhicules automobiles. Elle trouve en particulier des applications dans le domaine de l'éclairage directionnel où l'éclairage varie suivant le déplacement du véhicule.

### ARRIERE-PLAN TECHNOLOGIQUE DE L'INVENTION

Pour des raisons de sécurité, les dispositifs d'éclairage automobiles ont beaucoup évolué ces dernières années afin d'améliorer la visibilité du conducteur tout en se conformant à la réglementation en vigueur. Pour améliorer la visibilité du conducteur, certains dispositifs d'éclairage, ou projecteurs, proposent une adaptation du faisceau lumineux en fonction de la vitesse du véhicule, des conditions météorologiques, du croisement d'autres véhicules, etc. Certaines améliorations sont proposées pour les systèmes d'éclairage directionnel fixe, ou FBL (pour « Fixed Bending Light » en termes anglo-saxons). D'autres améliorations sont proposées pour les systèmes d'éclairage directionnel dynamique, ou DBL (pour « Dynamic Bending Light » en termes anglo-saxons).

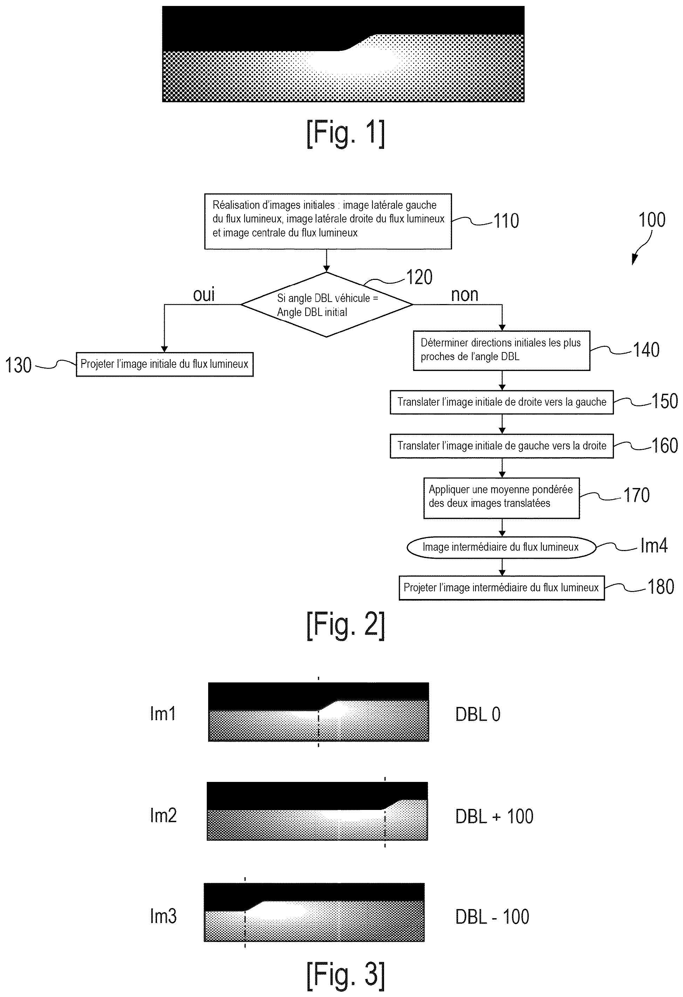

Dans les systèmes DBL, les dispositifs d'éclairage suivent la trajectoire de la voiture, par exemple dans les virages, afin d'éclairer au mieux la scène de route pour le conducteur. En général, la portée des faisceaux lumineux des projecteurs est déplacée vers la droite ou vers la gauche en fonction de l'angle du volant du véhicule et/ou de la vitesse du véhicule afin d'éclairer plus intensément la scène de route dans la direction vers laquelle se dirige le véhicule. Dans les systèmes DBL, les faisceaux lumineux sont généralement formés par des diodes électroluminescentes (appelées aussi LEDs), positionnées en ligne ou sous forme d'écran (c'est-à-dire suivant plusieurs rangées et colonnes), et dont l'intensité peut varier. Ainsi, avec un éclairage par diodes électroluminescentes, le flux lumineux émis par le projecteur peut varier et former une image de flux lumineux dont l'intensité diffère d'une zone de l'image à une autre. Un exemple d'une telle image de flux lumineux, appelée aussi photométrie, est représenté sur la [Fig.1]. Cette image de la [Fig.1] correspond à une image de flux lumineux émise par un projecteur lorsque le véhicule roule en ligne droite.

Une des techniques de DBL actuelle consiste à translater l'image du flux lumineux, par exemple l'image de la [Fig.1] - vers la droite lorsque le véhicule tourne à droite ou vers la gauche lorsque le véhicule tourne vers la gauche - de sorte que le flux lumineux soit décalé vers la droite ou la gauche. Une autre technique de DBL actuelle consiste à compresser un côté de l'image du flux lumineux et décompresser l'autre côté de ladite image de sorte à décaler le flux lumineux vers la droite ou la gauche.

L'une et l'autre de ces techniques actuelles ont pour effet de conserver la même image de flux lumineux, décalée vers la droite ou vers la gauche. Or, dans certaines circonstances, il peut être intéressant de modifier l'intensité lumineuse, par exemple pour que l'intensité lumineuse maximum soit plus haute ou, au contraire, plus basse, ce qui ne peut être obtenu en décalant simplement l'image du flux lumineux d'un côté ou de l'autre.

Par ailleurs, une nouvelle règlementation impose des caractéristiques spécifiques pour l'éclairage vers la droite et d'autres caractéristiques spécifiques pour l'éclairage vers la gauche, caractéristiques que les techniques actuelles de DBL ne peuvent pas satisfaire.

Le document EP 3 672 369 A1 est représentatif de l'art antérieur.

### Résumé de l'invention

Pour répondre aux problèmes évoqués ci-dessus dus au décalage de l'image de flux lumineux vers la droite ou vers la gauche, et pour répondre à la nouvelle réglementation, le demandeur propose un procédé de commande d'un éclairage directionnel dans lequel on réalise au moins trois images initiales du flux lumineux, différentes, à partir desquelles des images intermédiaires du flux lumineux peuvent être déterminées en appliquant une moyenne pondérée.

Selon un premier aspect, l'invention concerne un procédé de commande d'un éclairage directionnel par un dispositif d'éclairage de véhicule émettant, en direction d'une scène de route, un flux lumineux variant suivant le déplacement du véhicule, le procédé comprenant les opérations suivantes :
- a) détermination d'au moins trois images initiales du flux lumineux correspondant à trois directions prédéfinies, chaque image initiale du flux lumineux correspondant à une émission lumineuse par le dispositif d'éclairage dans une direction prédéfinie,
- d) lorsque le véhicule ne suit pas une des directions prédéfinies, détermination d'une image intermédiaire du flux lumineux à émettre par le dispositif d'éclairage dans une direction intermédiaire, par un moyennage pondéré de deux des trois images initiales du flux lumineux correspondant aux directions encadrant au plus près la direction intermédiaire ; et
- e) projection, sur la scène de route, en fonction de la direction de déplacement du véhicule, de l'image initiale ou intermédiaire du flux lumineux.

Ce procédé permet de déterminer une image du flux lumineux spécifique pour chaque direction prise par le véhicule entre la direction la plus à gauche et la direction la plus à droite.

Avantageusement, les trois images initiales du flux lumineux comportent :
- une image initiale latérale gauche du flux lumineux émise par le dispositif d'éclairage vers la gauche du véhicule,
- une image initiale latérale droite du flux lumineux émise par le dispositif d'éclairage vers la droite du véhicule, et
- une image initiale centrale du flux lumineux émise par le dispositif d'éclairage vers le centre du véhicule.

Avec ces trois images, il est possible de déterminer une image intermédiaire du flux lumineux entre l'image initiale latérale gauche et l'image initiale centrale, pour toutes les directions du véhicule comprises entre la direction la plus à gauche et la direction centrale, et une image intermédiaire du flux lumineux entre l'image initiale centrale et l'image initiale latérale droite, pour toutes les directions du véhicule comprises entre la direction centrale et la direction la plus à droite. Ainsi, une image du flux lumineux adaptée à n'importe quelle direction de déplacement du véhicule peut être projetée sur la route, la direction de déplacement pouvant être n'importe quelle direction contenue dans la plage des directions possibles entre l'angle de virage maximum à gauche et l'angle de virage maximum à droite autorisés par le véhicule. Le conducteur du véhicule voit donc une scène de route éclairée de façon optimale, en continu, durant tout le déplacement et quelle que soit la trajectoire du véhicule.

Par définition, on appelle « image initiale », une image du flux lumineux prédéterminée, correspondant à une direction prédéfinie et/ou un angle DBL particulier. Par extension, une direction prédéfinie est appelée aussi « direction initiale » et un angle DBL particulier est appelé aussi « angle DBL initial », par opposition avec l'angle DBL du véhicule en déplacement.

Outre les caractéristiques qui viennent d'être évoquées dans le paragraphe précédent, le procédé de commande d'un éclairage directionnel selon un aspect de l'invention peut présenter une ou plusieurs caractéristiques complémentaires parmi les suivantes, considérées individuellement ou selon toutes les combinaisons techniquement possibles :
- il comprend, préalablement à l'opération d) de détermination d'une image intermédiaire du flux lumineux :
   - une première opération c1) de translation d'une première image initiale du flux lumineux correspondant à une des deux directions encadrant au plus près la direction intermédiaire, et

   - une deuxième opération c2) de translation d'une deuxième image initiale du flux lumineux correspondant à l'autre des directions encadrant au plus près la direction intermédiaire, la première opération de translation c1) étant réalisée dans un sens opposé de celui de la deuxième opération de translation c2).
- il comprend une opération b) de détermination d'un positionnement proportionnel de l'image intermédiaire entre une première image initiale du flux lumineux et une deuxième image initiale du flux lumineux, un coefficient de positionnement étant déduit dudit positionnement proportionnel.
- le coefficient de positionnement est appliqué aux opérations c1) et c2) de translation de la première et de la deuxième images initiales du flux lumineux.
- le coefficient de positionnement est appliqué à l'opération d) de moyennage pondéré des deux images initiales du flux lumineux.

Selon un second aspect, l'invention concerne un dispositif d'éclairage directionnel de véhicule émettant un flux lumineux pour éclairer une scène de route en fonction du déplacement dudit véhicule, caractérisé en ce qu'il met en œuvre le procédé tel que défini ci-dessus.

Avantageusement, ce dispositif d'éclairage comprend une pluralité de diodes électroluminescentes, alignées ou sous forme d'écran, dont la puissance lumineuse varie de sorte à générer au moins trois images initiales de flux lumineux.

### BREVE DESCRIPTION DES FIGURES

D'autres avantages et caractéristiques de l'invention apparaîtront à la lecture de la description qui suit, illustrée par les figures dans lesquelles :
La [Fig.1], déjà décrite, représente un exemple d'image du flux lumineux classiquement utilisée dans les systèmes DBL ;
La [Fig.2] représente, sous la forme d'un diagramme fonctionnel, un exemple des différentes opérations du procédé selon l'invention ;
La [Fig.3] représente des exemples d'images initiales du flux lumineux réalisées dans le procédé selon l'invention ;
La [Fig.4] représente différentes images du flux lumineux utilisées dans le procédé selon l'invention lorsque l'angle DBL est de 0° ;
La [Fig.5] représente différentes images du flux lumineux utilisées dans le procédé selon l'invention lorsque l'angle DBL est de 100° ;
La [Fig.6] représente différentes images du flux lumineux utilisées dans le procédé selon l'invention lorsque l'angle DBL est de -100° ;
La [Fig.7] représente différentes images du flux lumineux utilisées dans le procédé selon l'invention lorsque l'angle DBL est de +40° ;
La [Fig.8] représente différentes images du flux lumineux utilisées dans le procédé selon l'invention lorsque l'angle DBL est de +80° ; et
La [Fig.9] représente différentes images du flux lumineux utilisées dans le procédé selon l'invention lorsque l'angle DBL est de -60°.

### DESCRIPTION DETAILLEE

Un exemple de réalisation d'un procédé de commande d'un éclairage directionnel par un projecteur de véhicule est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

Un exemple du procédé 100 selon l'invention est représenté, sous une forme fonctionnelle, sur la [Fig.2]. Ce procédé comporte une première opération 110 de réalisation des images initiales du flux lumineux. Ces images initiales du flux lumineux, appelées plus simplement images initiales, sont les images du flux lumineux émises par les projecteurs du véhicule lorsque ledit véhicule se déplace suivant des directions prédéfinies. Les images initiales sont au minimum au nombre de trois et correspondent à trois directions prédéfinies différentes.

Des exemples de trois images initiales sont représentés sur la [Fig.3]. Dans l'exemple de la [Fig.3], l'image initiale IM1 représente un exemple de flux lumineux pour un véhicule roulant en ligne droite, c'est-à-dire suivant une trajectoire rectiligne. Lorsque le véhicule roule en ligne droite, l'angle DBL correspondant à la direction suivie par le véhicule est égal à 0. L'image initiale IM1 pour un véhicule se déplaçant en ligne droite est appelée image initiale centrale.

Dans l'exemple de la [Fig.3], l'image initiale IM2 représente un exemple de flux lumineux pour un véhicule tournant au maximum vers la droite, c'est-à-dire suivant une trajectoire courbe orientée au maximum vers la droite. Lorsque le véhicule tourne à fond vers la droite, c'est-à-dire lorsque l'angle du volant est au maximum vers la droite, l'angle DBL est considéré égal à +100. L'image initiale IM2 pour un véhicule tournant à fond vers la droite est appelée image initiale latérale droite.

Dans l'exemple de la [Fig.3], l'image initiale IM3 représente un exemple de flux lumineux pour un véhicule tournant au maximum vers la gauche, c'est-à-dire suivant une trajectoire courbe orientée au maximum vers la gauche. Lorsque le véhicule tourne à fond vers la gauche, c'est-à-dire lorsque l'angle du volant est au maximum vers la gauche, l'angle DBL est considéré égal à -100. L'image initiale IM3 pour un véhicule tournant à fond vers la gauche est appelée image initiale latérale gauche.

Les trois images initiales IM1, IM2 et IM3 sont des images prédéfinies qui répondent aux exigences de la règlementation. Ces trois images IM1, IM2, IM3 sont déterminées par le fabricant du dispositif d'éclairage et implémentées dans ledit dispositif d'éclairage préalablement à la mise en circulation du véhicule ou lors de mises à jour dudit dispositif d'éclairage par un professionnel.

Le nombre trois d'images initiales est le nombre minimum d'images initiales pour la mise en œuvre du procédé de l'invention. Le nombre d'images initiales peut être supérieur à trois, par exemple égal à cinq. Lorsqu'il y a trois images initiales, ces images initiales comportent de préférence l'image initiale latérale gauche IM3, l'image initiale latérale droite IM2 et l'image initiale centrale IM1. Lorsque plus de trois images initiales sont implantées dans le dispositif d'éclairage, alors les deux images supplémentaires à IM1, IM2 et IM3 peuvent être des images intercalaires, entre l'image initiale centrale IM1 et, respectivement, les images initiales latérales gauche IM3 et droite IM2, correspondant par exemple à un angle DBL de +50 et -50. Quel que soit le nombre d'images initiales, le procédé 100 sera appliqué de la même façon qu'expliqué ci-dessous.

Après réalisation des images initiales IM1, IM2, IM3, le procédé 100 propose, au test 120, de vérifier si l'angle DBL du véhicule correspond à une des directions initiales prédéfinies. Autrement dit, le procédé 100 vérifie si l'angle DBL du véhicule correspond à l'un des angles DBL initiaux, pour lesquels une image initiale a été déterminée. Si c'est le cas, alors le procédé se poursuit par l'opération 130 au cours de laquelle l'image initiale du flux lumineux correspondant à l'angle DBL initial est projetée sur la scène de route. Par exemple, s'il est déterminé au test 120 que l'angle DBL du véhicule correspond à l'angle DBL initial +100, alors l'image initiale IM2 est projetée sur la route.

Au contraire, si l'angle DBL du véhicule ne correspond pas à un des angles DBL initiaux, alors le procédé se poursuit à l'étape 140 de détermination des directions initiales encadrant l'angle DBL du véhicule au plus près. Autrement dit, on détermine, à l'étape 140, quelles sont les angles DBL initiaux qui encadrent l'angle DBL du véhicule en déplacement. Par exemple, si l'angle DBL du véhicule est égal à +40, alors les angles DBL initiaux encadrant cet angle DBL + 40 sont l'angle DBL +100 et l'angle DBL 0. Selon un autre exemple, si l'angle DBL du véhicule est égal à -60, alors les angles DBL initiaux encadrant cet angle DBL -60 sont l'angle DBL -100 et l'angle DBL 0.

Le procédé 100 se poursuite ensuite aux étapes 150 et 160 de translation des images initiales. A l'étape 150, l'image initiale correspondant à l'angle DBL initial de droite - c'est-à-dire dont la valeur est supérieure à l'angle DBL du véhicule (encadrement par la droite de l'angle DBL du véhicule) - est translatée vers la gauche. A l'étape 160, l'image initiale correspondant à l'angle DBL initial de gauche - c'est-à-dire dont la valeur est inférieure à l'angle DBL du véhicule (encadrement par la gauche de l'angle DBL du véhicule) - est translatée vers la droite. Par exemple, pour un angle DBL du véhicule égal à +40, l'image initiale latérale droite IM2 (correspondant à l'angle DBL +100) est translatée vers la gauche et l'image initiale centrale IM1 (correspondant à l'angle DBL initial 0) est translatée vers la droite. Selon un autre exemple, où l'angle DBL du véhicule est égal à -60, l'image initiale latérale gauche IM3 (correspondant à l'angle DBL -100) est translatée vers la droite et l'image initiale centrale IM1 (correspondant à l'angle DBL initial 0) est translatée vers la gauche.

Les étapes 150 et 160 de translation sont, de préférence, appliquée en prenant en compte un coefficient de positionnement déterminé à partir du positionnement proportionnel de l'angle DBL du véhicule par rapport aux angles DBL initiaux les plus proches. En effet, l'étape 140 du procédé peut intégrer une opération de détermination du positionnement proportionnel de l'image intermédiaire entre la première image initiale, par exemple l'image initiale correspondant à l'angle DBL initial de droite, et la deuxième image initiale, par exemple l'image initiale correspondant à l'angle DBL initial de gauche. Un coefficient de positionnement est ensuite déduit de ce positionnement proportionnel.

Par exemple, pour un angle DBL du véhicule égal à +40, le coefficient de positionnement est de 40/60 ; l'image initiale centrale IM1 est translatée de 40 vers la droite et l'image initiale latérale droite IM2 est translatée de 60 vers la gauche, 40 et 60 étant des nombres proportionnels, par exemple donnés en pourcentages ou en nombres de pixels. Dans un autre exemple où l'angle DBL du véhicule est égal à -60, le coefficient de positionnement est de 60/40 ; l'image initiale centrale IM1 est translatée de 60 vers la gauche et l'image initiale latérale gauche I3 est translatée de 40 vers la droite.

A la suite des étapes 150 et 160, les deux images initiales, par exemple IM1/IM2 ou IM1/IM3, correspondant aux angles DBL initiaux les plus proches de l'angle DBL du véhicule sont superposées.

Le procédé 100 se poursuit à l'étape 170 au cours de laquelle une moyenne pondérée des deux images initiales translatées est appliquée. L'opération de moyennage de ces deux images initiales est réalisée en pondérant chacune des deux images en fonction du coefficient de positionnement utilisé dans les étapes 150 et 160. Par exemple, pour un angle DBL du véhicule égal à +40, la pondération pour l'image initiale centrale IM1 est de 40% et celle pour l'image initiale latérale droite IM2 est de 60%. Dans l'exemple où l'angle DBL du véhicule est égal à -60, la pondération de l'image initiale centrale IM1 est de 60% et celle de l'image initiale latérale gauche IM3 est de 40%. Dans un exemple où l'angle DBL du véhicule est égal à -20, la pondération de l'image initiale centrale IM1 est de 20% et celle de l'image initiale latérale gauche IM3 est de 80%.

L'opération de moyennage des deux images initiales translatées est réalisée, par exemple, pixel par pixel ou par toute autre technique de moyennage d'images connues dans le domaine du traitement d'images.

L'image Im4 obtenue après application de la moyenne pondérée aux deux images initiales translatées est appelée image intermédiaire du flux lumineux, ou simplement image intermédiaire. Cette image intermédiaire Im4 est alors projetée, à l'étape 180, sur la route.

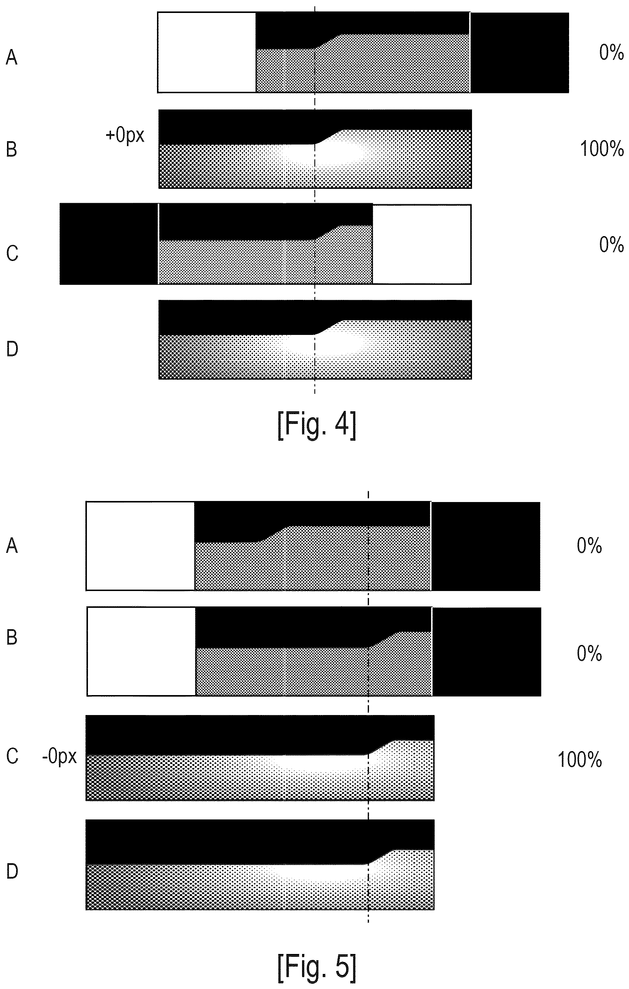

Plusieurs exemples d'images initiales et/ou d'images intermédiaires sont représentés sur les figures 4 à 9. Dans tous ces exemples, le nombre d'images initiales est de trois :
- l'image initiale montrée en A est l'image initiale latérale gauche, correspondant à l'angle DBL initial -100 (ou angle DBL le plus à gauche) ;
- l'image initiale montrée en B est l'image initiale centrale, correspondant à l'angle DBL initial 0, c'est-à-dire l'angle DBL central ;
- l'image initiale montrée en C est l'image initiale latérale droite, correspondant à un l'angle DBL initial +100 (ou angle DBL le plus à droite) ; et
- l'image montrée en D est l'image résultante (c'est-à-dire l'image initiale ou l'image intermédiaire selon ls cas) qui sera projetée sur la route.

Dans ces exemples des figures 4 à 9, les nombres en pixels (px) correspondent aux coefficients de positionnement appliqués à la translation des images initiales à translater et les nombres en pourcentages (%) correspondent à la pondération appliquée lors du moyennage des images initiales translatées. Les images initiales A, B ou C des figures 4 à 9, qui ne sont pas associées à un nombre de pixels, sont des images initiales non utilisées pour la détermination de l'image D à projeter.

Dans l'exemple de la [Fig.4], l'angle DBL du véhicule est l'angle DBL initial 0. L'image D à projeter est donc l'image initiale centrale (image B).

Dans l'exemple de la [Fig.5], l'angle DBL du véhicule est l'angle DBL initial +100. L'image D à projeter est donc l'image initiale latérale droite (image C).

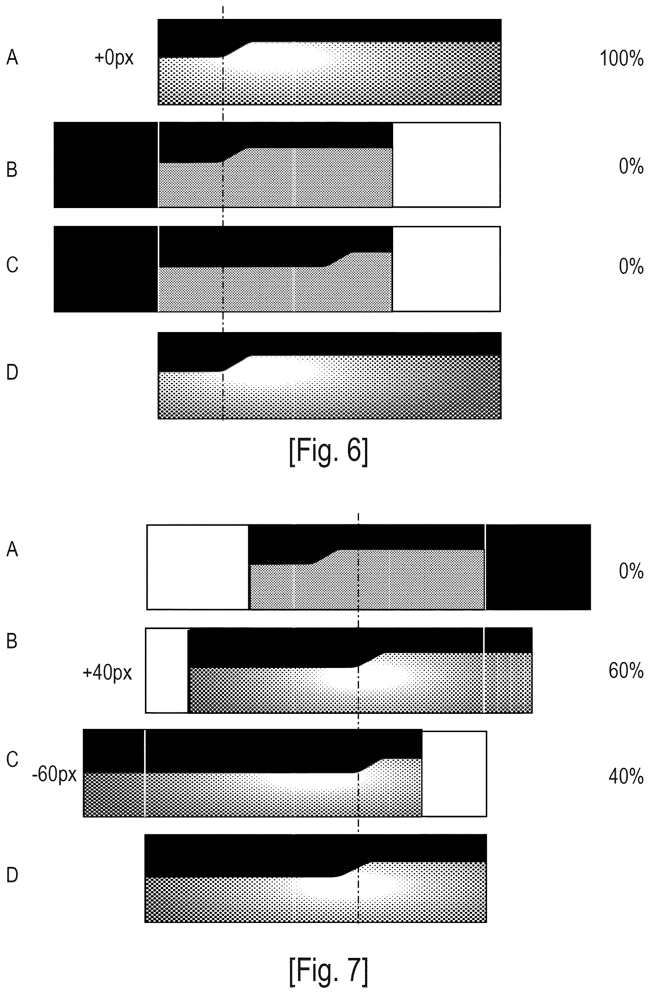

Dans l'exemple de la [Fig.6], l'angle DBL du véhicule est l'angle DBL initial -100. L'image D à projeter est donc l'image initiale latérale gauche (image A).

Dans l'exemple de la [Fig.7], l'angle DBL du véhicule est l'angle intermédiaire +40. Les images initiales à translater sont donc l'image initiale centrale (image B) qui est translatée de +40px (c'est-à-dire 40px vers la droite) et l'image initiale latérale droite (image C) qui est translatée de -60px (c'est-à-dire 60px vers la gauche). L'image D à projeter est donc l'image intermédiaire obtenue par une moyenne de l'image B avec une pondération de 60% et de l'image C avec une pondération de 40%.

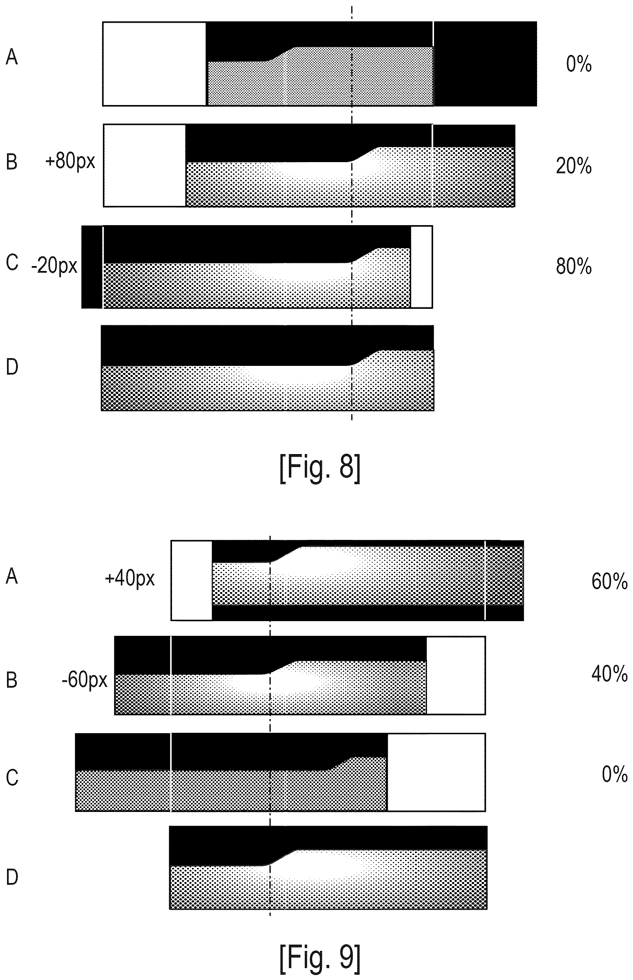

Dans l'exemple de la [Fig.8], l'angle DBL du véhicule est l'angle intermédiaire +80. Les images initiales à translater sont donc l'image initiale centrale (image B) qui est translatée de +80px (c'est-à-dire 80px vers la droite) et l'image initiale latérale droite (image C) qui est translatée de -20px (c'est-à-dire 20px vers la gauche). L'image D à projeter est donc l'image intermédiaire obtenue par une moyenne de l'image B avec une pondération de 20% et de l'image C avec une pondération de 80%.

Dans l'exemple de la [Fig.9], l'angle DBL du véhicule est l'angle intermédiaire -60. Les images initiales à translater sont donc l'image initiale latérale gauche (image A) qui est translatée de +40px (c'est-à-dire 40px vers la droite) et l'image initiale centrale (image B) qui est translatée de -60px (c'est-à-dire 60px vers la gauche). L'image D à projeter est donc l'image intermédiaire obtenue par une moyenne de l'image A avec une pondération de 60% et de l'image B avec une pondération de 40%.

Le procédé 100 a été décrit précédemment à travers des exemples où trois images initiales Im1, Im2 et Im3 ont été déterminées. On comprendra que le même procédé s'applique de la même façon quel que soit le nombre d'images initiales déterminées. Si plus que trois images initiales sont déterminées, les images initiales à translater et à moyenner sont les deux images initiales correspondant aux deux angles DBL initiaux encadrant au plus près l'angle DBL du véhicule. Par exemple, si cinq images initiales ont été déterminées pour des angles DBL initiaux de +0, +50, +100, -50 et -100, et si l'angle DBL du véhicule est de +20, alors les images initiales qui seront translatées et moyennées sont l'image initiale correspondant à l'angle DBL initial +0 et l'image initiale correspondant à l'angle DBL initial +50.

Le procédé tel qu'il vient d'être décrit peut être mis en œuvre dans de nombreux types de dispositifs d'éclairage comme, par exemple, les dispositifs d'éclairage de type matriciel, à balayage laser, à écran Leds ou micro-Leds, etc., dès lors que la puissance lumineuse émise peut varier. Par exemple, dans un dispositif d'éclairage à LEDS, la puissance de chaque LED est contrôlée, par exemple par une unité de contrôle, de sorte que différentes images initiales du flux lumineux puissent être générées pour les différents angles DBL initiaux choisis.

Bien que décrit à travers un certain nombre d'exemples, variantes et modes de réalisation, le procédé de commande d'un éclairage directionnel selon l'invention, comprend divers variantes, modifications et perfectionnements qui apparaîtront de façon évidente à l'homme du métier, étant entendu que ces variantes, modifications et perfectionnements font partie de la portée de l'invention.

## Revendications

1. Procédé (100) de commande d'un éclairage directionnel par un dispositif d'éclairage de véhicule émettant, en direction d'une scène de route, un flux lumineux variant suivant le déplacement du véhicule, **caractérisé en ce que** le procédé comprend les opérations suivantes :
- a) détermination (110) d'au moins trois images initiales du flux lumineux (Im1, Im2, Im3) correspondant à trois directions prédéfinies, chaque image initiale du flux lumineux correspondant à une émission lumineuse par le dispositif d'éclairage dans une direction prédéfinie,
- d) lorsque le véhicule ne suit pas une des directions prédéfinies, détermination d'une image intermédiaire du flux lumineux (Im4) à émettre par le dispositif d'éclairage dans une direction intermédiaire, par un moyennage pondéré (170) de deux des trois images initiales du flux lumineux (Im1, Im2, Im3) correspondant aux directions encadrant au plus près la direction intermédiaire ; et
- e) projection (130, 180), sur la scène de route, en fonction de la direction de déplacement du véhicule, de l'image initiale ou intermédiaire du flux lumineux.

2. Procédé selon la revendication 1, **caractérisé en ce que** les trois images initiales du flux lumineux comportent :
- une image initiale latérale gauche du flux lumineux (Im3) émise par le dispositif d'éclairage vers la gauche du véhicule,
- une image initiale latérale droite du flux lumineux (Im2) émise par le dispositif d'éclairage vers la droite du véhicule, et
- une image initiale centrale du flux lumineux (Im1) émise par le dispositif d'éclairage vers le centre du véhicule.

3. Procédé selon la revendication 1 ou 2, **caractérisé en ce qu'**il comprend, préalablement à l'opération d) de détermination d'une image intermédiaire du flux lumineux :
- une première opération c1) de translation (150) d'une première image initiale du flux lumineux correspondant à une des deux directions encadrant au plus près la direction intermédiaire, et
- une deuxième opération c2) de translation (160) d'une deuxième image initiale du flux lumineux correspondant à l'autre des directions encadrant au plus près la direction intermédiaire,
la première opération de translation c1) étant réalisée dans un sens opposé de celui de la deuxième opération de translation c2).

4. Procédé selon l'une quelconque des revendications 1 à 3, **caractérisé en ce qu'**il comprend une opération b) de détermination d'un positionnement proportionnel de l'image intermédiaire entre une première image initiale du flux lumineux et une deuxième image initiale du flux lumineux, un coefficient de positionnement étant déduit dudit positionnement proportionnel.

5. Procédé selon les revendications 3 et 4, **caractérisé en ce que** le coefficient de positionnement est appliqué aux opérations c1) et c2) de translation (150, 160) de la première et de la deuxième images initiales du flux lumineux.

6. Procédé selon la revendication 4 ou 5, **caractérisé en ce que** le coefficient de positionnement est appliqué à l'opération d) de moyennage pondéré (170) des deux images initiales du flux lumineux.

7. Dispositif d'éclairage directionnel de véhicule émettant un flux lumineux pour éclairer une scène de route en fonction du déplacement dudit véhicule, **caractérisé en ce qu'**il met en œuvre le procédé selon l'une quelconque des revendications précédentes.

8. Dispositif d'éclairage selon la revendication 7, **caractérisé en ce qu'**il comprend une pluralité de diodes électroluminescentes, alignées ou sous forme d'écran, dont la puissance lumineuse varie de sorte à générer au moins trois images initiales de flux lumineux (Im1, Im2, Im3).

## Patentansprüche

1. Verfahren (100) zur Steuerung einer Richtungsbeleuchtung durch eine Fahrzeugbeleuchtungsvorrichtung, die in Richtung einer Straßenszene einen Lichtstrom aussendet, der je nach Bewegung des Fahrzeugs variiert, **dadurch gekennzeichnet, dass** das Verfahren die folgenden Schritte umfasst:
- a) Bestimmung (110) von mindestens drei Anfangsbildern des Lichtstroms (Im1, Im2, Im3), die drei vordefinierten Richtungen entsprechen, wobei jedes Anfangsbild des Lichtstroms einer Lichtemission durch die Beleuchtungsvorrichtung in einer vordefinierten Richtung entspricht,
- d) wenn das Fahrzeug keiner der vordefinierten Richtungen folgt, Bestimmung eines Zwischenbildes des Lichtstroms (Im4), das von der Beleuchtungsvorrichtung in einer Zwischenrichtung ausgestrahlt werden soll, durch eine gewichtete Mittelung (170) von zwei der drei Anfangsbilder des Lichtstroms (Im1, Im2, Im3), die den Richtungen entsprechen, die die Zwischenrichtung am engsten einrahmen; und
- e) Projektion (130, 180) des Anfangs- oder Zwischenbildes des Lichtstroms auf die Straßenszene in Abhängigkeit von der Bewegungsrichtung des Fahrzeugs.

2. Verfahren nach Anspruch 1, **dadurch gekennzeichnet, dass** die drei Anfangsbilder des Lichtstroms umfassen:
- ein linkes seitliches Anfangsbild des Lichtstroms (Im3), das von der Beleuchtungsvorrichtung nach links vom Fahrzeug ausgestrahlt wird,
- ein rechtes seitliches Anfangsbild des Lichtstroms (Im2), das von der Beleuchtungsvorrichtung nach rechts vom Fahrzeug ausgestrahlt wird, und
- ein zentrales Anfangsbild des Lichtstroms (Im1), das von der Beleuchtungsvorrichtung zur Mitte des Fahrzeugs ausgestrahlt wird.

3. Verfahren nach Anspruch 1 oder 2, **dadurch gekennzeichnet, dass** es vor dem Schritt d) zur Bestimmung eines Zwischenbildes des Lichtstroms umfasst:
- einen ersten Schritt c1) der Translation (150) eines ersten Anfangsbildes des Lichtstroms, das einer der beiden Richtungen entspricht, die die Zwischenrichtung am engsten einrahmen, und
- einen zweiten Schritt c2) der Translation (160) eines zweiten Anfangsbildes des Lichtstroms, das der anderen Richtung entspricht, die die Zwischenrichtung am engsten einrahmt,
wobei der erste Translationsschritt c1) in einer entgegengesetzten Richtung zu der des zweiten Translationsschritts c2) durchgeführt wird.

4. Verfahren nach einem der Ansprüche 1 bis 3, **dadurch gekennzeichnet, dass** es einen Schritt b) zur Bestimmung einer proportionalen Positionierung des Zwischenbildes zwischen einem ersten Anfangsbild des Lichtstroms und einem zweiten Anfangsbild des Lichtstroms umfasst, wobei ein Positionierungskoeffizient aus dieser proportionalen Positionierung abgeleitet wird.

5. Verfahren nach den Ansprüchen 3 und 4, **dadurch gekennzeichnet, dass** der Positionierungskoeffizient auf die Schritte c1) und c2) der Translation (150, 160) des ersten und des zweiten Anfangsbildes des Lichtstroms angewendet wird.

6. Verfahren nach Anspruch 4 oder 5, **dadurch gekennzeichnet, dass** der Positionierungskoeffizient auf den Schritt d) der gewichteten Mittelung (170) der beiden Anfangsbilder des Lichtstroms angewendet wird.

7. Richtungsbeleuchtungsvorrichtung für ein Fahrzeug, die einen Lichtstrom aussendet, um eine Straßenszene in Abhängigkeit von der Bewegung des Fahrzeugs zu beleuchten, **dadurch gekennzeichnet, dass** sie das Verfahren nach einem der vorhergehenden Ansprüche implementiert.

8. Beleuchtungsvorrichtung nach Anspruch 7, **dadurch gekennzeichnet, dass** sie eine Vielzahl von Leuchtdioden umfasst, die in Reihe oder in Form eines Bildschirms angeordnet sind, deren Lichtleistung variiert, um mindestens drei Anfangsbilder des Lichtstroms (Im1, Im2, Im3) zu erzeugen.

## Claims

1. A method (100) for controlling bending light generated by a vehicle lighting device emitting, toward a road scene, a luminous flux that varies depending on the movement of the vehicle, **characterized in that** the method comprises the following steps:
- a) determining (110) at least three initial luminous-flux images (Im1, Im2, Im3) corresponding to three predefined directions, each initial luminous-flux image corresponding to emission of light by the lighting device in a predefined direction,
- d) when the vehicle is not following one of the predefined directions, determining an intermediate luminous-flux image (Im4) to be emitted by the lighting device in an intermediate direction, by weighted averaging (170) of two of the three initial luminous-flux images (Im1, Im2, Im3) corresponding to the directions flanking the intermediate direction most closely; and
- e) projecting (130, 180), onto the road scene, depending on the direction of movement of the vehicle, the initial or intermediate luminous-flux image.

2. The method as claimed in claim 1, **characterized in that** the three initial luminous-flux images comprise:
- a left lateral initial luminous-flux image (lm3) emitted by the lighting device toward the left of the vehicle,
- a right lateral initial luminous-flux image (lm2) emitted by the lighting device toward the right of the vehicle, and
- a central initial luminous-flux image (Im1) emitted by the lighting device toward the center of the vehicle.

3. The method as claimed in claim 1 or 2, **characterized in that** it comprises, prior to operation d) of determining an intermediate luminous-flux image:
- a first operation c1) of translating (150) a first initial luminous-flux image corresponding to one of the two directions flanking the intermediate direction most closely, and
- a second operation c2) of translating (160) a second initial luminous-flux image corresponding to the other of the directions flanking the intermediate direction most closely,
the first translating operation c1) being carried out in a direction opposite to that of the second translating operation c2).

4. The method as claimed in any one of claims 1 to 3, **characterized in that** it comprises an operation b) of determining a proportional position of the intermediate image between a first initial luminous-flux image and a second initial luminous-flux image, a positioning coefficient being deduced from said proportional position.

5. The method as claimed in claims 3 and 4, **characterized in that** the positioning coefficient is applied in operations c1) and c2) of translating (150, 160) the first and second initial luminous-flux images.

6. The method as claimed in claim 4 or 5, **characterized in that** the positioning coefficient is applied in operation d) of weighted averaging (170) of the two initial luminous-flux images.

7. A vehicle bending-light lighting device emitting a luminous flux to illuminate a road scene depending on the movement of said vehicle, **characterized in that** it implements the method as claimed in any one of the preceding claims.

8. The lighting device as claimed in claim 7, **characterized in that** it comprises a plurality of light-emitting diodes, aligned or taking the form of a screen, the luminous power of which varies so as to generate at least three initial luminous-flux images (Im1, Im2, Im3).
